# EUROPÄISCHE PATENTSCHRIFT

(11) **EP 2 827 290 B1**
(45) Veröffentlichungstag und Bekanntmachung des Hinweises auf die Patenterteilung: **27.01.2021**
(21) Anmeldenummer: 14177915.7
(22) Anmeldetag: 21.07.2014
(51) Int. Cl.: G06Q 10/08, G06Q 30/06

(54) **Verfahren zum Handling und/oder Vertrieb von Waren mittels eines Warendepots sowie Warendepot**
Method for handling and/or distribution of goods by means of a goods depot and goods depot
Procédé de manipulation et/ou de vente de marchandises à l'aide d'un dépôt de marchandises, ainsi que dépôt de marchandises

(30) Priorität: 19.07.2013 DE 102013012061
(43) Veröffentlichungstag der Anmeldung: 21.01.2015
(73) Patentinhaber: Kropp, Daniel, 61137 Schöneck (DE)
(72) Erfinder: Kropp, Daniel, 61137 Schöneck (DE)
(74) Vertreter: Stoffregen, Hans-Herbert

(56) Entgegenhaltungen:
- EP-A1- 1 170 686
- EP-A1- 2 525 309
- DE-A1- 10 105 918
- DE-B3-102009 053 141
- US-A1- 2003 065 421
- US-A1- 2007 150 375
- US-A1- 2013 091 873

## Beschreibung

Die Erfindung bezieht sich auf ein Verfahren zum Handling und/oder Vertrieb von Waren nach dem Oberbegriff des Anspruch 1 sowie auf ein Warendepot nach dem Oberbegriff des Anspruchs 5.

Ein Verfahren und eine Vorrichtung zum Handling und/oder Vertrieb von Waren, die von zumindest einem ersten Akteur wie Lieferant in einem Warendepot eingelagert und von zumindest einem zweiten Akteur wie Entnehmer oder Kunden aus dem Warendepot entnommen werden, ist aus der US 2007/150375 A1 bekannt. Bei einer Annahme der Waren durch das Warendepot wird eine individuelle Waren- und/oder Akteurspezifische Kennung erfasst, eingegeben oder durch das Warendepot generiert. Anschließend werden die Waren in einem Fächer-System, vergleichbar mit einem Schließfachsystem, gelagert. Für jede Ware muss daher ein separat abschließbares Fach vorgehalten werden, was mit erhöhtem Aufwand verbunden ist und die Flexibilität der Lagerung einschränkt.

Die EP 2 525 309 A1 bezieht sich auf ein System zur Bereitstellung von Lebensmitteln für Endverbraucher und umfasst eine, vorzugsweise mehrere dezentrale Verbrauchsstationen, eine zentrale Komissionierstation, ein zentrales Lager,

Warenkörbe sowie eine dezentrale Abholstation. Von einer Verbraucherstation können Bestellungen an die zentrale Kommissionierstation übermittelt werden. In der denzentralen stationären Abholstation werden kommissionierte Warenkörbe zwischengelagert, um vom Verbraucher abgeholt und zu seinem Wohnort gebracht zu werden. Für Waren, die bei bestimmten Bedingungen vorgehalten werden, sind Transferbehälter vorgesehen, die als Kühlboxen ausgebildet sind. Durch die Kühlboxen wird das Lagervolumen vergrößert, wodurch die Lagerkapazität, bei gleichem Raumvolumen reduziert wird. Auch müssen die Kühlboxen nach Entnahme der Waren zurückgenommen bzw. entsorgt oder gereinigt werden, was ebenfalls mit erhöhtem Aufwand verbunden ist.

Ein Verfahren und ein Warendepot zum Handling und/oder Vertrieb von Ware ist aus der DE 101 05 918 A1 bekannt. Mit dem Warendepot zur Lagerung und Übergabe von Waren in Kleingebinden soll eine Lösung geschaffen werden, mit der ein kompaktes Zwischenlager bereitgestellt werden kann, wobei die Position des Beschickens nicht zwingend mit der Entnahmeposition übereinstimmen muss. Dies wird durch eine Mehrzahl von übereinanderliegenden Positionierebenen mit einer Mehrzahl von Standplätzen für Aufnahmebehälter aufweisenden Turm mit einem jede Behälterposition bedienenden Förderzeug erreicht sowie mit wenigstens einer Zugriffsebene für den Benutzter zur Entnahme bzw. Entleerung eines für ihn bestimmten Behälters, wobei die Vorrichtung als Zwischen- oder Pufferlager in ein Warenverteilsystem eingebunden ist. Bereiche des Warendepots sind zur Lagerung von Objekten ausgebildet, die gegenüber der Umgebungstemperatur bestimmungsgemäß eine niedrigere oder höhere Temperatur aufweisen. Wenigstens eine Zone des Warendepots ist als Heizzone, als Kühlzone und/oder als Tiefkühlzone ausgebildet.

Die EP 1 170 686 A1 betrifft ein Warenempfangssystem und zugeordnetes Bestellbestätigungssystem, insbesondere für ein Bestell- und Belieferungsprogramm. Betreffend die Warenempfangsvorrichtung kann im Hinblick auf die Annahme von verderblicher Ware, beispielsweise Lebensmittel, vorgesehen sein, dass ein Kühlaggregat zur Kühlung von kühlungsbedürftiger oder Gefrierbedingungen bedürftiger Ware vorgesehen ist. Das Kühlaggregat ist vorzugsweise automatisiert in Abhängigkeit von sich auf die angenommenen Waren beziehenden oder die Warenlieferung identifizierenden Daten einschaltbar. Der Warenaufnahmeraum oder der Warenaufnahmebereich kann eine Lageranordnung mit mehreren Warenlagerplätzen und einer vorzugsweise motorisch angetriebenen Fördereinrichtung zum Fördern von Ware zu einem jeweiligen Lagerplatz aufweisen.

Ein weiteres Verfahren zum Handling von Waren mittels eines Warendepots der eingangs genannten Art ist in der WO03/016151 A2 beschrieben. Das Warendepot in Form eines Verkaufsautomaten umfasst mehrere Ladeboxen, die in einem transportfähigen Container zusammengefasst sind, der werksseitig mit vorgefertigten Speisen, Getränken, Gemüsen oder fertigen Salaten, Zutaten, Suppen Backwaren, Eis sowie Zusatzprodukten befüllt ist, in den Verkaufsautomaten einsetzbar und nach Leerung wieder entnehmbar ist. Der Verkaufsautomat dient zur Zubereitung und - vorbereitung von Speisen und Abgabe des Inhalts der Verpackung und weist Einrichtungen zur Auswahl eines Gerichts und eines Getränks aus der Ladebox sowie Transporteinrichtungen zur Führung durch einen Mikrowellenofen, eine Getränkeabfülleinrichtung, eine Abgabeeinheit an den Verbraucher, eine Dehnungs-Vorbereitungseinheit und eine Kühleinrichtung auf.

Allerdings ist der Verkaufsautomat nicht geeignet, Waren verschiedener Lieferanten anzunehmen und - individuell auf den Kunden abgestimmt - dem Kunden aus dem Depot zu übergeben.

In der US 5 997 928 ist ein Verfahren und eine Vorrichtung zur Überprüfung des Inhalts von Verkaufssystemen beschrieben. Das Verfahren und die Vorrichtung sind so ausgebildet, um Qualität von Nahrungsmitteln in einem Verkaufswagen zu prüfen. Die Nahrungsmittel sind in einer geschlossenen, klimatisierten, antreibbaren, mobilen oder stationären Servicestation enthalten. Die angebotenen Waren sind von einem oder mehreren Lieferanten, jedoch nicht für einen Kunden individualisiert.

Davon ausgehend liegt der vorliegenden Erfindung die Aufgabe zugrunde, ein Verfahren zum Handling und/oder Vertrieb von Waren mittels eines Warendepots sowie ein Warendepot der eingangs genannten Art derart weiterzubilden, dass von Akteuren in Form von Lieferanten und Kunden sowohl bei einer Bestellaufgabe als auch bei einer Bestellübergabe größtmögliche Freiheiten hinsichtlich Zeit, Ort und Art der Lagerung und Übergabe geboten wird.

Die Aufgabe wird erfindungsgemäß u. a. durch ein Verfahren mit den Merkmalen des Anspruchs 1 gelöst.

Das erfindungsgemäße Verfahren bietet die Möglichkeit zum Vertrieb, zur automatisierten Annahme und zur automatisierten Abgabe von Waren.

Die individuelle Kennung enthält Informationen über die Zuordnung der Ware zu dem zumindest einen ersten und/oder zweiten Akteur und Informationen über die Ware
selbst in Form von Lagerbedingungen und Mindesthaltbarkeitsdaten der Ware. Die im Auftrag des zumindest einen zweiten Akteurs von dem zumindest einen ersten Akteur an das Warendepot gelieferte Ware wird mittels eines Handling-Systems angenommen und entsprechend der individuellen Kennung in dem Warendepot gelagert.

Gemäß dem erfindungsgemäßen Verfahren können von verschiedenen ersten Akteuren wie Lieferanten angebotene Waren von verschiedenen zweiten Akteuren wie Entnehmer oder Kunden bestellt werden, wobei die ersten Akteure sodann die Waren entnehmerspezifisch oder kundenspezifisch dem Warendepot zuführen und der zweite Akteur wie Entnehmer oder Kunde die Waren nach Identifizierung bzw. Eingabe einer individuellen Kennung sodann von dem Warendepot abholen kann.

Die individuelle Kennung kann eine waren- und/oder akteurspezifische insbesondere entnehmerspezifische Kennung sein.

Eine bevorzugte Verfahrensweise zeichnet sich dadurch aus, dass die individuelle Kennung durch Scannen der Ware oder einer der Ware zugeordneten Codierung wie EAN- oder QR-Code und/oder durch eine Eingabe des ersten Akteurs erfasst wird und/oder durch Ausgabe eines Belegs oder einer visuellen Anzeige am Warendepot oder einem externen Gerät wie einem mobilen Datengerät oder PC generiert wird. Die individuelle Kennung kann dem zweiten Akteur wie Entnehmer bekannt sein oder diesem von dem ersten Akteur wie Lieferanten übermittelt werden.

Durch obige Maßnahmen wird eine automatisierte Annahme der Waren und eine individuelle Zuordnung der Waren zu einem der Akteure ermöglicht.

Des Weiteren ist vorgesehen, dass die einem der Akteure zugeordneten Waren vorzugsweise ohne Zuordnung zueinander in dem Warendepot gelagert und nach Eingabe der individuellen Kennung mittels des Handling-Systems automatisch einer Ausgabe zugeführt werden.

Die Annahme und Verteilung der Waren innerhalb des Warendepots erfolgt mittels des in dem Warendepot installierten Handling-Systems. Folglich bestellt ein Akteur wie Kunde von verschiedenen Akteuren wie Lieferanten Waren. Diese werden - individuell auf die Akteure wie Kunden abgestimmt - den Akteuren wie Kunden aus dem Warendepot übergeben.

Es besteht somit eine Einkaufsmöglichkeit, wann immer der Kunde es möchte. Die Akteure können sicherstellen, dass die Waren ordnungsgemäß in dem Warendepot gelagert werden, da die Lieferungen nicht von individuellen Zustellungen bei dem Akteur wie Kunden abhängig sind.

Der zweite Akteur kann somit Waren von verschiedenen ersten Akteuren wie Lieferanten bestellen. Diese können die Waren individuell auf den zweiten Akteur wie Kunden abgestimmt in dem Warendepot lagern und diesem aus dem Warendepot übergeben.

Des Weiteren ist vorgesehen, dass eine Identifizierung des zweiten Akteurs wie Kunde mittels eines Identifikationssystems wie Touchscreen-Display, Fingerprint-Sensor und/oder Kartenlesegerät erfolgt und mit der individuellen Kennung der dem Akteur zugeordneten Ware verglichen wird.

Die Aufgabe wird erfindungsgemäß durch ein Warendepot mit den Merkmalen des Anspruchs 5 gelöst.

Eine bevorzugte Ausführungsform zeichnet sich dadurch aus, dass die Mittel zur automatisierten Annahme ein Mittel zur Erfassung der individuellen Kennung der Waren, wie Scann-System oder ein Mittel zur manuellen oder elektronischen Eingabe der individuellen Kennung wie Tastatur, Touchscreen, umfasst.

Zur automatisierten Annahme und/oder automatisierten Abgabe der Waren ist die zumindest eine Ausgabe als ein Ausgabeschacht und die zumindest eine Eingabe als ein Eingabeschacht ausgebildet. Der zumindest eine Eingabeschacht und der zumindest eine Ausgebeschacht kann als ein Ein-/Ausgabeschacht ausgebildet sein.

Zur Lagerung verschiedener Waren ist vorgesehen, dass das Warendepot Lagerbereiche mit unterschiedlichen Klimatisierungszonen aufweist.

Ferner kann das Warendepot zumindest eine Klimatisierungseinrichtung zur Temperatur- und/oder Luftfeuchte-Regulierung der Klimatisierungszonen umfassen.

Eine bevorzugte Ausführungsform zeichnet sich dadurch aus, dass das Handling-System und/oder das Warendepot Mittel zur Entgegennahme von Zahlungen und/oder Barcodes umfasst.

Ferner kann das Warendepot und/oder Handling-System über eine Kommunikationsschnittstelle mit einem Datennetz wie Internet gekoppelt sein, um Bestellungen von Akteuren anzunehmen sowie Informationen über die gelagerten Waren abzurufen.

Das Handling-System umfasst ein Handhabungssystem in Form eines Lager-Roboters sowie ein Lagersystem. Das Lagersystem kann in Form eines Regalsystems zur Ablage der Waren ausgebildet sein, wobei die Lagerung der Waren vorzugsweise ohne Zuordnung zueinander erfolgt.

Das Warendepot selbst kann vorzugsweise modular als z. B. isolierter Container ausgebildet sein, so dass die Möglichkeit einer Erweiterung des Lagersystems gegeben ist.

Es bedarf für die Lösung nicht nur eines einfachen Warendepots für Waren wie Lebensmittel, sondern eines intelligenten, mit einem außergewöhnlich arbeitenden integrierten, vollkommen autark selbständig, vollautomatisiert arbeitenden Warendepot wie Lebensmitteldepots, das zwar auch, aber im optimalen Fall nicht nur einem, sondern gleichzeitig vielen unterschiedlichen Akteuren wie Anbietern von Lebensmitteln, die Möglichkeit gibt, 7 Tage die Woche, 24 h täglich, gute Waren wie Lebensmittel an dieses zu liefern und den Akteuren wie Kunden, diese an 7 Tage in der Woche, 24 täglich abholen dort abholen zu können. Mit anderen Worten stellt die Erfindung ein vorzugsweise mobiles, klimatisiertes Warendepot, mit Möglichkeit zum Vertrieb sowie automatisierter Annahme und automatisierter Abgabe dieser Waren zur Verfügung.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine schematische Darstellung des Warendepots,
- Fig. 2: eine Draufsicht des Warendepots mit Pkw- und Befahrungsstrecke und
- Fig. 3a, b: eine schematische Drauf- und Seitenansicht des Depots sowie eines Handling-Systems des Warendepots.

### 1. Philosophie der Erfindung

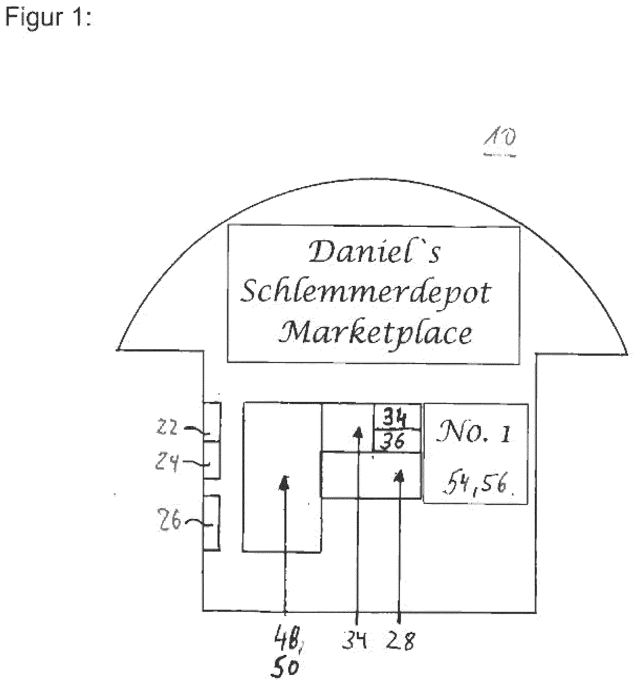

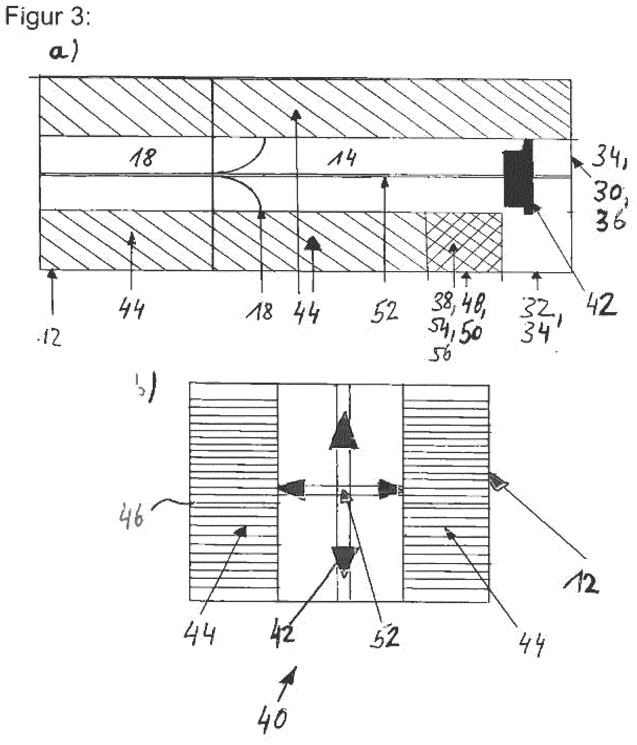

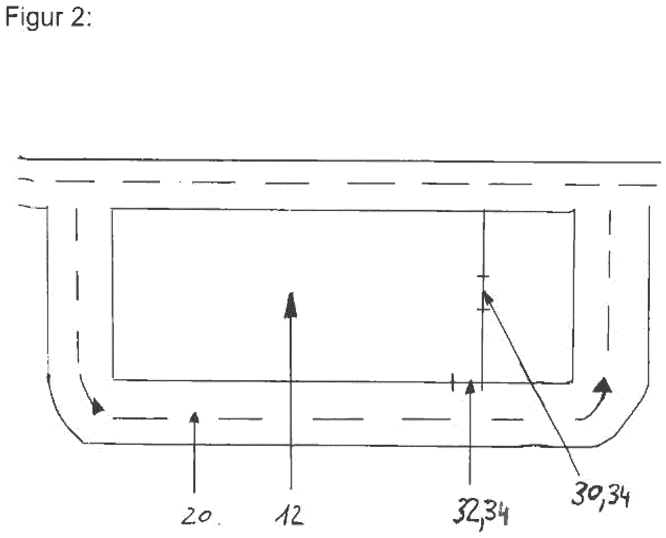

2.1 Konstruktion und technische Ausstattung des Depot's
   2.1.1 Beschreibung der Konstruktion
   2.1.2 Skizze Konstruktionsbeispiel Figur 1+2 siehe Seite 40+41 bzw. Beschreibung Figur 1+2 Legende zu den Zeichnungen Seite 39
2.2 Klimatisierung
   2.2.1 Temperatursteuerung
   2.2.2 Luftfeuchtesteuerung
   2.2.3 Temperaturmonitoring mit Warnfunktion
2.3 Warenein- und Ausgabeschacht
   2.3.1 Display zur Bedienung des Depot's
   2.3.2 Fingerprintsensoren
   2.3.3 Scanner zum Lesen von EAN und QR Code
   2.3.4 Kundenkarten-Lesefunktion
   2.3.5 Kassenfunktion
   2.3.6 Belegdrucker
   2.3.7 Primary/ Secondary SD
2.4 Das Lagersystem
   2.4.1 Skizze Konstruktionsbeispiel Figur 3 Seite 42
   2.4.2 Das Regalsystem
   2.4.3 Der Lagerroboter
   2.4.4 Die Verpackung
2.5 Interne Hardware
   2.5.1 Rechner
   2.5.2 Server
2.6 Überwachungskameras
2.7 Stromzähler
2.8 Internetanschluss
2.9 Notstromversorgung
3. Externe Hardware
   3.1 Kommissionsterminal stationär
   3.2 Kommissionsterminal mobil
   3.3 Stationäres Fingerprint Lesegerät
   3.4 Gerät mit installierter Applikation zur mobilen Kommunikation mit dem Depot
4.Software:
   4.1 Softwarefunktionen für den Consumer
      4.1.1 Homepage "www.Schlemmerdepot.de"
      4.1.2 SD Marketplace eines jeden Depot's
         4.1.2.1 Der Einkauf im SD Onlineshop eines Akteurs
            A) Individuelle Bestellung
            B) Einkauf aus dem Vorratskühl- bzw. Vorratstiefkühlschrank des Akteurs
         4.1.2.2 SD Markethall
         4.1.2.3 SD Order Just in Sequence Delivery and Take off
         4.1.2.4 SD Discount Shop
   4.2 Vergabe der Kundennummern
      4.2.1 SD Kunden Stammdaten
   4.3 Consumer Account
      4.3.1 Consumer Bilanz
      4.3.2 Family Account
      4.3.3 Forgotten Package Reminder
      4.3.4 SD Ordertrack
      4.3.5 SD Collecting Orders:
      4.3.6 Waren Informations App Software für den angeschlossenen Akteur
   4.4 Depot Manager - General Depot Manager
      4.4.1 SD DM Verteiler
      4.4.2 SD DM Chatfunction
   4.5 Akteurs Account
      4.5.1 Kundenverzeichnis mit Klärung des Kreditrahmens
      4.5.2 Onlineshop des Akteurs
      4.5.3 SD Production Assistant
      4.5.4 SD Slot Calculator
      4.5.5 SD Kommission
      4.5.6 SD MHD Reminder and Storage Assistant
      4.5.7 SD Paper-Case:
      4.5.8 SD Flyer-Store:
      4.5.9 SD Slot share n'trade
      4.5.10 SD Schnittstellen
      4.5.11 SD Finance
         4.5.11.1 Betriebskostenrechner mit Splitting Funktion:
         4.5.11.2 Cash Money:
         4.5.11.3 Akteur Forderungen:
         4.5.11.3.1 Offene Posten Liste:
         4.5.11.4 SD Bilanz:
         4.5.11.5 SD Finance Professional:
            4.5.11.5.1 Cash Money pro:
            4.5.11.5.2 SD Inkasso:
            4.5.11.5.3 SD Inkasso Pro:
   4.6 Warn- sowie Notfallprocedere
      4.6.1 Spannungsverlust
      4.6.2 Temperaturschwankungen ausserhalb vorab definierter Norm
      4.6.3 Allgemeine Störungen
5. Daniel's Schlemmerdepot Premium Marketplace
6. Daniel's Schlemmerdepot Premium Marketplace Deluxe

### 1.1 Philosophie des Warendepots:

Das Warendepot, nachfolgend "Daniel's Schlemmerdepot Marketplace", "Depot" oder "SD" genannt, ist ein vollautomatisiertes, "mobiles" technisches Gerät, dass durch seine Konstruktion und Ausstattung in Form von Hard- und Software und seiner bidirektionalen, onlinefähigen Schnittstelle, durch selbständiges Anwenden vorab definierter Algorithmen, einem oder mehreren angeschlossenen geschäftlichen Akteuren nachfolgend Akteur/e genannt, auf einem online E Marketplace, die Möglichkeit bietet, Ihr Geschäft und oder Ihre Waren zu präsentieren, Lebensmittel oder allgemeine Waren dort und auch direkt am SD anzubieten, Aufträge für die Akteure annimmt, sie an diese weiterleitet, durch diese beauftragt, mit im Depot vorrätigen Waren Handel betreibt, mit einem integrierten vollautomatisierten Lagerroboter Warenkommissionen annimmt, diese im integrierten Lagerregalsystem sowohl im Plus- als auch im Minustemperatur-Bereich deponiert, temperatursensorisch sensible Waren EU und HACCP Hygienerichtlinien entsprechend gerecht lagert, verwaltungslogistische Aufgaben, sowie die des Lagerhaltungs-, Dokumentations-, Buchhaltungs-, Handels- und Abrechnungswesens, sowohl zwischen angeschlossenem Akteur und Konsumenten nachfolgend "Consumer" genannt, als auch zwischen angeschlossenen Akteuren untereinander, selbständig durchführen kann, zur Kommunikation und Steuerung des Depots sowohl den Akteuren sowie den Consumern aktuelle Applikationen zur Verfügung stellt, Aufgaben des Zahlungsverkehrs sowohl in bar als auch deren, die auf elektronischem Wege stattfinden, sowohl zwischen B2C (Business to Consumer) als auch zwischen B2B (Business to Business) nach Aufforderung für diese durchführt, und nachdem der Consumer auf unterschiedlichste Weise, Autorität über die Waren erreicht hat, diese nach Freigabe durch den angeschlossenen Akteur, an den Consumer oder an eine andere durch den angeschlossenen Akteur definierte Person abgibt.

Dies fordert ein breites qualitativ hochwertiges Warenangebot, einen bequemen und übersichtlichen Bestellvorgang, eine einfache Verifizierung am SD, sowie eine schnelle unkomplizierte Bezahlung und Ausgabe der Waren, welche der Kunde in einem so hochwertigen Karton bzw. einer Verpackung ausgehändigt bekommt, dass selbst hier zu spüren ist, dass er diese Qualität genau hier als Kunde des "Daniel's Schlemmerdepot Marketplace" bekommt.

Der SD Akteur entspricht mit dem Angebot des SD diesen Anforderungen einer modernen Zeit. Ein Grundbaustein der Philosophie des SD ist der nachhaltige Umgang mit Ressourcen!

### Ressourcen wie:

### A) Nahrungsmitteln

Mit ihnen wird beim Kauf im SD insofern nachhaltig umgegangen, dass trotz der Ermöglichung eines breiten Angebotes eine Überproduktion durch intelligente Planung und Vertrieb dieser, auf ein Minimum reduziert wird.

### B) Energie

Mit Ihr wird beim SD zum einen durch das Zusammentreffen verschiedenster Waren, verschiedener Anbieter an einem Punkt, der kollektiven Lieferung dieser, für mehrere Kunden durch den einzelnen Akteur zu diesem Punkt, sowie des Einsatzes intelligenter Anwendungen wie z.B. in Pkt. 4.5.9 SD Slot share n'trade beschrieben, durch gesteigerte Effizienz sowohl durch die Einsparung von Elektrizität, als auch der von Kraftstoffen wie Benzin oder Diesel, der Nachhaltigkeit entsprochen.

Eine weitere, und für den modernen SD Kunden zukünftig immer wichtiger werdende Ressource, ist die Ressource "Zeit"

### C) Zeit

Hier wird beim SD mit durchdachtem Einsatz verschiedener Werkzeuge, wie zB. effizient gestalteter Kommissionsabläufe, auf der Seite des Akteurs, der Ermöglichung der Bestellung rund um die Uhr, an 365 Tagen im Jahr auf der Seite des Kunden, aber auch und darauf zielt bspw. der Punkt 4.1.2.3 "SD Order Just in Sequence Delivery and Take off" durch synchronisierte, ineinandergreifende Abläufe, zwischen Akteur und Kunden, der Nachhaltigkeit entsprochen.

### 2. Konstruktion und technische Ausstattung des Depot's gemäß Fig. 1 bis 3

### 2.1 Beschreibung der Konstruktion

Das Depot 10 wird witterungsbeständig zur Aufstellung im Außenbereich konstruiert. Ein Grundrahmen des Depot's besteht aus einem Stahlgerüst, wobei als Wand, Decken und Bodenelemente isolierte Sandwichpanele verbaut werden.

Das Depot 10 wird in unterschiedlichen Größen und Ausführungen konstruiert und eingesetzt.

Vom kleinen Mini Depot 10, welches bspw. an stark frequentierten Orten zu Fuß erreichbar ist, bis zum großen Depot 12 welches neben einer Kühlzone 14 optional auch über einen durch eine Abtrennung 16 abgetrennten Tiefkühlbereich 18 verfügt, und im Drive Thru Stil gem Fig. 2 vom PKW 20 aus angefahren und bedient werden kann. Das Depot 10, 12 ist modular konstruiert, sodass es je nach geforderter Kapazität erweitert werden kann.

Das Dach und die Wände des Depot's dienen als hochwertige Werbefläche für das Schlemmerdepot.

### 2.2 Klimatisierung:

### 2.2.1 Temperaturregulierung:

Da das Depot 10, 12 für die Aufstellung im Freien konstruiert wird, ist, um eine konstante gewünschte Temperatur im Gerät gewährleisten zu können, das Gerät mit einer Klimaanlage 22 ausgestattet, welche sowohl kühlt als auch heizt.

### 2.2.2 Luftfeuchteregulierung:

Damit die Verpackungen durch zu hohe Luftfeuchtigkeit keinen Schaden nehmen, ist im Depot ein Gerät 24 installiert, welches die Luftfeuchte reguliert.

### 2.2.3 Temperaturmonitoring mit Warnfunktion:

Im Depot 10, 12 ist ein digitales Temperaturaufzeichnungsgerät 26 mit Warnfunktion installiert, welches permanent den Temperaturverlauf im Depot protokolliert und im Falle einer Abweichung der Ist- von der Solltemperatur, online oder/und per Sms, seine Akteure informiert, um gegenzusteuern zu können, damit Verluste durch Verderb der Waren vermieden werden können.

### 2.3 Ein- und Ausgabeschacht:

Je nach Größe und Gegebenheit des Aufstellungsortes des Depot's, wird dieses mit mindestens einem oder mehreren Ein- und Ausgabeschächten 28, und/oder zusätzlich einem Eingabeschacht 30 und/oder einem Ausgabeschacht 32 konstruiert und ausgestattet.

### 2.3.1 Display zur Bedienung des Depot's:

Die Bedienung des Depot's 10, 12 erfolgt über ein ebenfalls dem IP65 Schutzstandard entsprechendes Eingabemittel 34 wie Touchscreen Display. Das Display 32 befindet sich sowohl am Ein- / Ausgabeschacht 28, als auch am Eingabeschacht 30 und am Ausgabeschacht 32.

### 2.3.2 Fingerprintsensoren:

Optional wird ein Identifikationssystem 34 wie Fingerprintsensoren an den Schächten 28, 30, 32 des Depots 10, 12 installiert, an welchen der Benutzer des Depot's, sowohl seitens der Akteure und auch der Consumer, neben der Möglichkeit zur Verifizierung durch Pineingabe, EC-, Kredit-, oder Schlemmerdepotkarte, die Möglichkeit zur Verifizierung durch den eigenen Fingerabdruck geboten bekommt.

### 2.3.3 Scanner zum Lesen von EAN und QR Codes:

Ein Erfassungssystem 36 wie Scanner befindet sich am Ein- / Ausgabeschacht 18, sowie am Eingabeschacht 30 des Depot's. Er scannt eine individuelle Kennung wie Sendungs ID, welche auf einem Paketlabel der Ware gedruckt ist, leitet die Information an ein Lagerhaltungssystem 38 weiter, welches dann ein Handlingsystem 40 umfassend einen Lagerroboter 42 beauftragt, die Ware/Sendung anzunehmen und in ein Regalsystem 44 mit dafür reserviertem Fach wie Slot 46 einzulagern.

### 2.3.4 Kundenkarten-Lesefunktion:

Wie bereits unter Punkt 2.3.2 beschrieben, ist die Schlemmerdepot-Kundenkarte neben anderen, eine Möglichkeit zur Verifizierung des Depotbenutzers, sowohl seitens des Consumers, als auch der Benutzer seitens der angeschlossenen Akteure.

### 2.3.5 Kassenfunktion:

Ein Großteil der Zahlungsvorgänge des Schlemmerdepot's werden online abgewickelt. Um Zahlungsvorgänge allerdings auch direkt am Warendepot 10, 12 zu gewährleisten, wird jedes Schlemmerdepot am Ein- und Ausgabeschacht 28 oder einem Ausgabeschacht 32 mit mindestens einem Kassenterminal 48 ausgestattet. Am Kassenterminal sind sowohl Zahlungen in bar, als auch Zahlungen durch Debitkarten wie bspw. Girocard, electronic cash/ec cash, Maestro und V PAY, und Kreditkarten wie bspw. Master Card, Maestro, Visa oder American Express möglich.

Das Kassenterminal 48 ist so im, bzw. am Gerät 10, 12 integriert, das die Bargeldentnahme, sowie die Bestückung des Terminals mit Wechselgeld von aussen bspw. durch beauftragte Finanzdienstleister, bzw. Geldtransportunternehmen, möglich ist, ohne das Depot selbst betreten zu müssen.

### 2.3.6 Belegdrucker:

Ein Drucker 50, der sich direkt am Ausgabeschacht 28, 32 befindet, druckt Quittungen, sowohl bei Ein- und Ausgabe von Sendungen am Depot, bei Bedarf aber auch Lieferscheine und Rechnungen. Der Drucker kann auch eine von dem Depot generierte individuelle Kennung einer Ware drucken.

### 2.3.7 Primary/ Secondary SD:

Entschliesst sich ein Betrieb dazu, Akteur eines Schlemmerdepot's zu werden, so wird das erste Schlemmerdepot an welchem er aktiv wird, als sein Primary Schlemmerdepot definiert. Auf dem Server dieses Depot's werden seine hauptsächlichen Daten, wie zB. der Onlineshop eingerichtet. Entschliesst er sich dazu, Akteur an einem weiteren oder mehreren weiteren Depot's aktiv zu werden, so werden diese in der zeitlichen Reihenfolge seines Aktivwerdens als dessen Secondary Depot's 1-x beschrieben und mit den Primary Depot des Akteurs gekoppelt.

### 2.4 Das Lagersystem:

### 2.4.1 Das Regalsystem:

Individuell je nach Größe des Depot's und abhängig vom geplanten Warensortiment, sind unterschiedliche Größen der Fächer 46 nachfolgend "Slot" genannt, im Depot konstruiert.
Durch die Struktur der Benennung der einzelnen Slot's ist es, um eine optimale Auslastung des SD's zu erreichen, dem System möglich, auch kleinere Pakete in größere Slot's zwischen zu lagern, solange das optimale Slot nicht verfügbar ist.

Hat das System ein kleineres Paket in ein größeres Slot eingelagert, erkennt es sobald das optimale Slot frei wird und lagert das Paket dann selbständig um, damit keine Platzkapazitäten verschwendet werden.

### 2.4.3 Der Lagerroboter:

Die Ein- und Auslagerung der Waren übernimmt das Handlingsystem 40, welches als vollautomatischer auf Schienen 52 geführter Lagerroboter 42 ausgebildet ist.

Der Lagerroboter 42 kann Pakete unterschiedlicher Größen und Formen am Warenein- und Ausgabeschacht 28, 30 entgegen nehmen, selbständig in das ihm vom System vorgegebenen Slot einlagern, auf Befehl des Systems dieses dort wieder aufnehmen und am Ausgabeschacht 32 wieder auslagern.

### 2.4.4 Die Verpackung:

Um eine störungsfreie Arbeit des Lagerroboters zu erreichen, ist es vorzugsweise notwendig, dass alle im Depot 10, 12 eingelagerten Waren bzw. Artikel und Kommissionen in Faltkartons verpackt sind.

Aus hygienischen Gründen ist es ratsam, dass die Ware in den Faltkartons zusätzlich in Siegelschalen oder Folienbeuteln verschweisst verpackt werden. Somit ist der Geruchs- und Geschmacksübertrag verschiedener Waren wie z.B. Fisch, Käse, Fleisch und feinen Patisserie-Produkten ausgeschlossen, was dem SD somit das Angebot einer sehr großen Produktvielfalt ermöglicht.

### 2.5 Interne Hardware:

### 2.5.1 Rechner:

Die Rechenleistung übernehmen pro Depot 10 vorzugsweise zwei dem IP65 Schutzstandard entsprechende Recheneinheiten 54 wie Industrie PC's. Ein erster PC übernimmt die geforderte Rechenarbeit, auf einem zweiten PC werden sämtliche Rechenvorgänge zur Datensicherung gespiegelt gespeichert. Kommt es zum Ausfall des ersten PC's übernimmt dieser PC dann die Rechenarbeit.

### 2.5.2 Server:

Je Depot, werden wie bei den Rechnern, zwei IP65 geschützte Server 56 installiert. Ein Server auf den verschiedene Systeme zugreifen können und ein Server, auf welchem die Daten gespiegelt zur Verfügung stehen und welcher dann im Falle einer Serverstörung, dessen Arbeit übernimmt.

### 2.6 Überwachungskameras:

Um die Gefahr durch Vandalismus einzudämmen, wird das Depot fakultativ an verschiedenen Stellen sowohl um sowie im Depot videoüberwacht.

### 2.7 Stromzähler:

Um im Falle eines nicht eigenen Stromanschlusses oder einer Nutzung durch mehrere Akteure, eine genaue Abrechnung der Betriebskosten des SD's zu gewährleisten, wird das SD wahlweise mit einem eigenen Stromzähler ausgestattet.

### 2.8 Internetanschluss:

Je nachdem in welcher Region das SD eingesetzt wird, sind erwartungsgemäß unterschiedliche Datenübertragungsraten verfügbar.

Um ein störungsfreies Arbeiten des SD's zu gewährleisten, wird es wahlweise mit einem Telefonfestanschluss und/oder einem Funkanschluss für die Verbindung des SD's mit dem Internet ausgestattet.

### 2.9 Notstromversorgung:

Um durch Spannungsverlust zu erwartenden Schäden bestmöglich zu vermeiden, wird das SD mit ständig geladenen Notfallakkus ausgestattet. Ihre Kapazität ist dafür ausgelegt, um
A) Notfallprocerde wie in Pkt. 4.6.1 beschrieben zu ermöglichen, sowie
B) längstmöglich die Kühlfunktion des SD aufrecht zu erhalten.

### 3.Externe Hardware:

### 3.1 Kommissionsterminal stationär:

Seitens der Depotsoftware wird hier um möglicherweise bereits vorhandene betriebseigene Hardware, wie zB. moderne Ladenwaagen Kassenverbundsysteme nutzen zu können, gemäß einem eigenständigen Erfindungsgedanken eine Datenschnittstelle, welche sich an marktführende Anbieter wie bspw. Bizerba, Mettler Toledo oder Berkel anpasst, installiert.

Das komplette Kommissionsterminal, bei nicht vorhandener teilweise kompatibler Hardware zur Kommission, besteht aus einem Bediendisplay mit angeschlossenem oder integriertem internetfähigem PC, je nach Sortiment des Akteurs, eine an den PC gekoppelte Waage, ein Drucker an dem Lieferscheine gedruckt werden und ein Labelwriter an welchem Codes für den Versand gedruckt werden.

Je nach geplantem Aufstellungsort, wird das Kommissionsterminal auch in Feucht- und Kühlraum geeigneter Ausführung IP-65 Standart entsprechend, angeboten und geliefert.

### 3.2 Kommissionsterminal mobil:

Das mobile Kommissionsterminal ist seitens der Funktionen identisch mit dem des stationären Terminals, siehe Pos. 3.1, allerdings befinden sich hierbei alle Komponenten in einem transportablen Gehäuse. Die Komponenten sind hierbei auch optional in IP 65 geschützter Ausführung und mit einem mobilen Internetzugang ausgestattet erhältlich.

Interessant könnte ein solches Terminal für Akteure sein, die beispielsweise parallel zum Wochenmarktgeschäft, oder einem von Haus zu Haus Liefergeschäft, mobil Waren für die spätere Abgabe ans Depot vorbereiten möchten.

### 3.3 Stationäres Fingerprint Lesegerät:

Entscheidet sich der Akteur dafür, seinen Kunden die Möglichkeit zur Verifizierung zu bieten, ist es hiermit nicht nur am Depot, sondern erfindungsgemäß auch im Hauptgeschäft oder einer Filiale möglich, einmalig den Fingerabdruck der Personen die sich später am Depot unkompliziert verifizieren möchten einzuscannen und im System zu speichern.

### 3.4 Gerät mit installierter Applikation zur mobilen Kommunikation mit dem Depot:

Internetfähiges mobiles Datenerfassungsgerät MDE, Tablet PC oder Smartphone, mit dem der Akteur jederzeit in der Lage ist, mobil mit dem Depot zu kommunizieren.

### 4. Software:

### 4.1 Softwarefunktionen für den Consumer:

Eine Erfindung mit eigenständigem Charakter bezieht sich auf ein Vertriebssystem mit Warendepot.

### 4.1.1 Homepage "www.Schlemmerdepot.de":

Diese Homepage dient dazu, dass der Kunde sich zum einen über die Funktionen des SD informieren und das, oder die für Ihn erreich- und nutzbaren SD's finden kann.

Gelangt man auf diese Homepage, trifft man hier auf Daniel.
Anders als bei üblichen Homepages, ist hier geplant, dass der Kunde sich seine Informationen zwar auch erlesen kann, sich aber auch abhängig von der zur verfügbaren Datenübertragungsrate, ähnlich wie bei einem modernen Videospiel, durch eine animierte Figur über die Möglichkeiten die ihm das SD bietet aufklären zu lassen.

### 9. November 2020 - 54354 neue Beschreibungsseiten in Reinschrift

Über den SD-Finder, hat der Kunde die Möglichkeit, das für Ihn nächstgelegene Schlemmerdepot zu finden. Dies geschieht sowohl über die Kartendarstellung, als auch über die Suche nach Postleitzahlen, sowie die Umkreissuche.

### 4.1.2 SD Marketplace eines jeden Depot's:

Ruft er nun das Depot auf, so gelangt er direkt auf den depoteigenen Server!

Das Depot ist mobil autark und ohne fremden Server an anderen Orten stationiert nutzbar!

Hier auf der Homepage des SD's gelangt der Kunde auf den, je nach verfügbaren Datenübertragungsvolumen und Akteurswunsch, virtuellen Marketplace.

Das SD ist so ausgestattet, dass es zwar auch nur einem Akteur, aber auch mehreren Akteuren die Nutzung bietet.

Der Kunde hat nun die Möglichkeit, den Onlineshop eines angeschlossenen Akteurs, oder die SD Markethall (siehe Punkt 4.1.2.2) zu öffnen.

### 4.1.2.1 Der Einkauf im SD Onlineshop eines Akteurs:

Im Onlineshop des Akteurs hat der Kunde nun die Möglichkeit,
A) eine individuelle Bestellung vorzunehmen, oder
B) einen Einkauf aus dem Vorratskühl- bzw. Vorratstiefkühlschrank des Akteurs zu tätigen.

### A)

### Individuelle Bestellung:

Über eine bidirektionale Schnittstelle hat der Akteur hier die Möglichkeit, eine Datenbank seines Lagerbestandes, mit dem Onlineshop zu koppeln, um dem Kunden verbindlich Waren anbieten zu können, oder er hat ohne die Nutzung dieser Funktion die Möglichkeit, dem Kunden Waren freibleibend je nach Verfügbarkeit anzubieten. In diesem Fall kann er dem Kunden die Möglichkeit geben, Alternativen seitens des Akteurs zuzulassen, für den Fall, dass ein gewünschter Artikel wie bspw. ein bestimmtes Fleischteil nicht, ein vergleichbares Produkt jedoch beim Metzger vorrätig ist.

Gleichwohl kann der Kunde entscheiden, ob es im Falle dessen, dass ein oder mehrere Artikel der von ihm getätigten Bestellung nicht lieferbar sind, die restliche Bestellung aufrechterhalten bleibt, oder unter Benachrichtigung storniert werden soll.

Da es sich bei gerade im Bereich Fleisch und Wurst oftmals um Kommissionen handelt, die frisch verwogen werden, hat der Kunde die Möglichkeit, dem Akteur einen Entscheidungsrahmen einzuräumen, um Ihm bspw. eine 10-15 % Steigerung der Liefermenge ohne extra Bestätigung erlaubt.

### Lieferoptionen der individuellen Bestellung:

Der Akteur legt fest, welche der möglichen Liefervarianten er anbietet:
1. Versand auf dem Post- oder Speditionsweg
2. Abholung im Hauptgeschäft oder in der Filiale
3. Lieferung der Sendung durch einen betriebseigenen Heimlieferservice
4. Lieferung der Sendung an ein Schlemmerdepot

Bei Variante 2 u. 3 hat der Akteur die Möglichkeit, nach vorheriger Freigabe durch den Kunden, dessen Warensendung für den Fall, dass sie bei 2. nicht zu den Geschäftszeiten durch den Kunden abgeholt wurde, oder bei 3. der Kunde nicht zu Hause angetroffen wurde, die Warensendung alternativ für den Kunden erreichbar in einem Schlemmerdepot zu deponieren.

In diesem Fall kommt evtl. bei Nr. 2 jedoch aber bei Nr. 3 das MDE (mobiles DatenErfassungsgerät siehe Punkt 3.4) zum Einsatz.

Erreicht die Sendung aus bspw. den oben genannten Gründen nicht seinen Empfänger, so kann der Akteur bzw. die durch ihn zur Lieferung autorisierte Person, mit dem MDE und der Anwendung " 4.5.4 SD Slot Calculator" eine dem Platzbedarf der Sendung entsprechende Verfügbarkeit der Lagerkapazitäten in einem durch den Akteur betriebenen SD prüfen und diese im Falle der Verfügbarkeit sofort reservieren.

Das MDE generiert dann für den Fall, dass der Kunde über keinen eigenen Consumer Account (siehe Punkt 5) verfügt, einen Sendungs-Zugangscode.

Dieser Sendungs-Zugangscode sowie die prognostizierte Ankunftszeit der Sendung im Depot wird dem Kunden dann wahlweise per SMS, E-Mail oder Postwurfsendung zugestellt.

Mit diesem Zugangscode oder dem Consumer Account hat der Kunde bei den Punkten 2.,3. und 4. die Möglichkeit, seine Warensendung am SD in Empfang zu nehmen.

### B)

### Einkauf aus dem Vorratskühl- bzw. Vorratstiefkühlschrank:

Bei diesem Einkauf handelt es sich um Waren, die der Akteur bereits im SD für den direkten Verkauf an den Endkunden bestimmt und deponiert hat.

Anders als bei der individuellen Bestellung, hat der Kunde hier auch die Möglichkeit direkt am SD aus den im SD zur Verfügung stehenden Waren zu wählen, sie zu kaufen und direkt in Empfang zu nehmen.

### 4.1.2.2 SD Markethall:

In der SD Markethall, erhält der Kunde einen Gesamtüberblick über
A) Alle sich im Depot befindlichen Artikel, aller Akteure welche aus deren Vorratskühl- bzw. Vorratstiefkühlschränken zum direkten Kauf angeboten werden.
B) Alle Waren, die durch individuelle Bestellungen durch die dem SD angeschlossenen Akteure lieferbar sind.

### 4.1.2.3 SD Order Just in Sequence Delivery and Take off:

Beim "SD Order Just in Sequence Delivery and Take off" handelt es sich um eine Modalität, bei welcher der verbindliche Kaufvertrag zwischen Kunden und Akteur nach Anfrage des Kunden um einen genauen Liefertermin und verbindlicher Bestätigung dessen durch den Akteur zustande kommt.

Je nach den AGB's des Akteurs zu diesem Modell, ist es z.B. möglich, dass, sollte der Akteur nicht rechtzeitig liefern, dem Kunden ein bestimmter Geldbetrag, Festbetrag oder prozentual entsprechend des Auftragswertes, gutgeschrieben oder erstattet wird, oder sollte der Kunde die Lieferung nicht rechtzeitig abholen, diese Ihm zwar, ganz, nur teilweise oder auch durch entstehende Entsorgungskosten, je nach Vereinbarung, mit Aufpreis, berechnet wird, die Ware jedoch wieder in den Besitz des Akteurs kommt oder bleibt und ihm diese, zur weiteren Verfügung wie bspw. in Punkt 4.1.2.3 SD Discount Shop beschrieben, steht.

Interessant ist diese Modalität bspw. für Kunden, bei welchen sich das SD auf einer Wegstrecke wie z.B. dem Weg nach Hause, oder zur Arbeit befindet, sie aber am Depot keine Wartezeiten in Kauf nehmen möchten.
Erreicht die Lieferung das Depot, wird der Kunde per Mail informiert. Geschieht dies bis zur vereinbarten Zeit wird die Ware berechnet. Kann der Kunde sie abholen, kann er sie unter finanziellen Einbußen, weiter in den freien Verkauf geben.

Beim Nutzen dieser Modalität, empfiehlt es sich aus Gründen der Anonymität und des Datenschutzes in Bezug auf den ursprünglichen Kunden, den Lieferschein bzw. die Rechnung nicht der Warenkommission direkt beizufügen, sondern diese erst bei Abholung durch den bei Punkt 2.3.6 beschriebenen Belegdrucker auszustellen.

### 4.1.2.4 SD Discount Shop:

Im SD Discount Shop werden Waren "preisreduziert" oder "gratis" angeboten, die qualitativ einwandfrei sind, sich jedoch nahe am Mindesthaltbarkeitsdatum (MHD) befinden.

Dies können Waren aus den Vorratskühl- bzw. Vorratstiefkühlschränken sein, welche nicht abverkauft wurden, aber auch individuelle Bestellungen, welche gekauft, jedoch nicht durch Ihren Empfänger abgeholt wurden und im Sinne der Allgemeinen Geschäftsbedingungen nun zum weiteren Verkauf freigegeben werden, oder Kommissionen die (siehe Pkt. 4.1.2.3.) durch den Akteur nicht entsprechend der vereinbarten Zeit geliefert wurden und diese nun nicht durch den Kunden angenommen werden.

### 4.2 Vergabe der Kundennummern:

Um die Anwendung bestimmter Funktionen zu ermöglichen, wird, unabhängig davon, bei welchem oder wie vielen dem SD angeschlossenen Akteur/en eine Person Kunde sein möchte, die Vergabe der Kundennummern vom SD übernommen.

### 4.2.1 SD Kunden Stammdaten:

In den Stammdaten macht der Kunde Angaben über die gewünschte Rechnungsanschrift, die Lieferanschrift im Falle der Nutzung des Heimlieferservice und der, sollten in einem bestimmten Umkreis ein od. mehrere weiteres/weitere SD's verfügbar sein, evtl. alternativ zur Lieferung akzeptierte SD's und wenn ja, welche Priorisierung, in welcher Reihenfolge gewünscht ist, gibt seine E-Mail-Adresse, sowie die Telefonnummer zur Erreichbarkeit an. Mit diesen Daten wird für den Kunden eine Visitenkarte erstellt, die sobald der Kunde bei einem Akteur eine Bestellung machen möchte, von dessen Akteursaccount gezogen wird.

### 4.3 Consumer Account:

### 4.3.1 Consumer Bilanz:

Neben den Angaben die der Kunde bei 4.2.1 SD Kunden Stammdaten gemacht hat, erhält der Kunde im Consumer Account eine vollständige Auflistung seiner Kaufaktivitäten.

Er erhält eine differenzierte Auflistung aller seiner gekauften und bereits bezahlten Waren, sowie eine genaue Auflistung seiner noch bestehenden Verbindlichkeiten.

### 4.3.2 Family and Care Account:

Das Familienkonto beim Schlemmerdepot.

Hierbei können bspw. Ehe- oder Lebenspartner einen Account gemeinsam nutzen.

Außerdem ist es hierbei auch möglich, ihren Kindern oder anderen Dritten, dies können bspw. Patenkinder oder auch Menschen sein, welche sich bspw. in wirtschaftlich od. sozial schwierigen Umständen befinden und für die der Accountinhaber sorgen möchte, ein Budget einzurichten über welches diese dann beim Einkauf im SD selbständig verfügen können.

Der Account Chief kann für jeden einzelnen durch ihn autorisierten Mitbenutzer seines Accounts, zum einen eine sehr detaillierte Budgetierung festlegen, bspw. einzelne Tages-, Wochen-, oder Monatsbudgets, die sich bei Nichtausschöpfung addieren oder verfallen, zum anderen aber auch durch Sperren bestimmter Artikel, festlegen, welche Waren durch den Mitbenutzer selbständig erworben werden dürfen.

Der durch den Accountinhaber autorisierte Mitbenutzer hat in dem Fall, dass der Account Chief eine Vorauswahl, der durch den Mitbenutzer zu erwerbenden Waren getroffen hat, dann auch in seinen persönlich nutzbaren SD Applikationen nur dieses Angebot sichtbar.

Dies ist insbesondere dann wichtig, wenn bspw. Eltern Einfluss auf die Ernährung Ihrer Kinder nehmen möchten.

Somit können Kinder dann bspw. selbständig eine Auswahl darüber treffen, welche Schulbrote sie auf dem Schulweg am Depot abholen möchten, oder welche durch einen Akteur frisch zubereiteten Convenience Artikel, sie dann nach der Schule am SD abholen möchten.

Der Account Chief erhält wenn gewünscht über sämtliche seinen Account betreffenden Vorgänge Nachricht.

Mit dieser Funktion, haben Eltern bspw. die Möglichkeit Ihren Kindern auch in deren Abwesenheit, eine qualitativ hochwertige, bargeldlose, Versorgung mit Lebensmitteln zu ermöglichen.

### 4.3.3 Forgotten Package Reminder:

Da aus Gründen der Hygiene, im Schlemmerdepot keine Waren, deren Mindesthaltbarkeitsdatum überschritten wurde deponiert sein dürfen, wird der Kunde durch den 4.3.3 Forgotten Package Reminder vor dem Ablauf des MHD's seiner gekauften aber noch nicht in Empfang genommenen und noch im SD deponierten Waren, um Ihn vor Verlust dieser zu schützen, auf diese explizit hingewiesen.

### 4.3.4 SD Ordertrack

SD Ordertrack ist eine App die dem Kunden ermöglicht, jederzeit den Lieferstatus seiner Bestellungen einzusehen.

### 4.3.5 SD Collecting Orders:

Bei SD Collecting Orders, handelt es sich um eine Funktion, bei welcher der Kunde dem Akteur mitteilen kann, dass er zu seinem geplanten Warenabholzeitpunkt noch andere Bestellungen anderer Akteure erwartet. Sowohl der Kunde als auch die Akteure, erhalten hierbei eine Auflistung der aktuellen Lieferstadien. Denkbar ist hierbei eine Wettbewerbsfunktion zu integrieren, um den Service für den Consumer durch gesteigerten Ansporn unter den Akteuren zu optimieren.

### 4.3.6 Waren Informations App:

Dem Kunden wird seitens des SD eine Applikation zur Verfügung gestellt, in welcher er gezielt festlegen kann über welche im Depot verfügbaren Waren er Informationen erhält.

So wird er bspw. sofort darüber informiert, wenn ein Akteur einen bestimmten Artikel welcher zuvor durch den Kunden markiert wurde im Depot zum Verkauf eingelagert wurde.

Der Kunde kann von einzelnen Artikeln, bestimmter Akteure bis hin zu allen Artikeln aller angeschlossenen Akteure eines oder mehrerer SD's informiert werden. So vermeidet der Kunde ungewünschte Informationsflut und kann sich dennoch auf die Verfügbarkeit von Waren die er zuvor in seiner Favoritenliste festgelegt hat, hinweisen lassen.

### 4.4 Depotmanager-General Depot Manager:

Jeder einem SD's angeschlossen Akteur, definiert einen für sich dem SD gegenüber handlungsbefugten Ansprechpartner, nachfolgend "DM" oder "Depotmanager" genannt. Mit diesem DM kommuniziert das SD fortlaufend bidirektional.

Es teilt ihm vorab festgelegte Informationen per SMS und/oder E Mail mit, gewährt ihm Einblicke in durch den Akteur festgelegte Informationen und führt Befehle die es durch den DM erhält aus.

Unter allen DM's wird für jedes SD ein General Depot Manager nachfolgend GDM genannt gewählt. Dieser GDM wird durch die Akteure gegenüber den anderen DM mit besonderen Kompetenzen ausgestattet um als Hauptansprechpartner der DM einen reibungslosen Betrieb des Depots zu ermöglichen.

Eine evtl. zu vereinbarende Aufwandsentschädigung die dem Akteur, welcher den GDM stellt, gutzuschreiben ist, wird automatisch dem 4.5.11.1 Betriebskostenrechner mit Splitting Funktion genannt und in diese Betriebskostenberechnung eingepflegt.

### 4.4.1 SD DM Verteiler:

Beim SD DM Verteiler, handelt es sich um eine E-Mail-Einstellung seitens des SD, die alle DM eines SD's sowie den GDM gleichzeitig zusammen informiert.

Auf bestimmte Informationen wie bspw. eine relevante Temperaturschwankung, die auf eine Störung der Kühlung des SD hinweist, kann somit schnell allinformierend eingegangen werden.

### 4.4.2 SD DM Chatfunction:

Jedes SD wird für die DM und den GDM mit einer Chatfunktion ausgestattet.

Ähnlich wie bei einem Marktbeschickertreffen, können hierbei gemeinsam beliebige Sachverhalte unter den Akteuren diskutiert werden, ohne dabei zeitaufwendige Treffen in Kauf nehmen zu müssen.

### 4.5 Akteurs Account:

### 4.5.1 Kundenverzeichnis mit Klärung des Kreditrahmens:

Möchte sich ein Kunde im Online Shop eines Akteurs als solcher registrieren um dort eine Bestellung tätigen zu können, so fordert der Akteur bei 4.2.1 SD Kunden Stammdaten dessen Visitenkarte an. Der Akteur legt nun widerruflich und jederzeit abänderbar fest, ob und in welcher Höhe er dem Kunden einen Kreditrahmen einräumt. Diese Daten sendet der Akteur dann wiederum an das SD.

Dies ist notwendig, damit das SD bspw. bei der Vermittlung von Einkäufen des Kunden in der 4.1.2.2 SD Markethall, oder dem 4.1.2.3 SD Discount Shop über klare Anweisungen bezgl. der Freigabe der Waren verfügt. Stellt der Akteur dem Kunden keinen ausreichenden Kreditrahmen zur Verfügung, so kann der Kunde beim Einkauf in der SD Markethall sowie dem Discount Shop im Vorfeld keine Reservierung von Waren vornehmen und Waren nur gegen direkte Bezahlung in bar oder E-Cash am Depot in Empfang nehmen.

### 4.5.2 Onlineshop des Akteurs

Wie schon bei Punkt "4.1.2.1 Der Einkauf im SD Onlineshop eines Akteurs" beschrieben, wird hier eine Schnittstelle definiert, mit welcher es möglich ist, eine Datenbank in welcher die aktuellen Lagerbestände des Akteurs beschrieben sind, mit dem Shop zu koppeln, um Warensendungen dem Consumer direkt zusagen zu können. Wird diese Möglichkeit nicht genutzt, so hat der Akteur die Möglichkeit, Bestellungen erst nach Durchsicht zu bestätigen.

Allerdings bietet der Onlineshop dem Akteur auch die Möglichkeit, für jeden Artikel bestimmte Einzel- sowie Gesamtbestellmengen in Verbindung mit bestimmten Parametern zu definieren. Somit kann der Onlineshop selbständig Warenkommissionen zusagen, welche zwar noch nicht produziert sind, dem Akteur allerdings bis zum Lieferzeitpunkt zu produzieren möglich ist.

So kann, nach zuvor getätigten Einstellungen, der Onlineshop einer Fleischerei einem Kunden bspw. Wiener Würstchen, wissend, dass Donnerstags produziert werden, in einer durch die eingestellten Parameter begrenzten Menge für die Lieferung am Freitag oder später zusagen.

Die Summe aller bestellten Artikel werden automatisch dem 4.5.3 SD Production Assistant, die einzelnen Bestellungen dem 4.5.4 SD Slot Calculator zur weiteren Bearbeitung zur Verfügung gestellt.

Im Moment der Bestellungsaufgabe bzw. Bestätigung einer individuellen Bestellung, durch den Akteur, prognostiziert das System, unter Berücksichtigung zuvor durch den Akteur festgelegter, und durch Praxiserfahrung jederzeit abänderbarer Parameter wie Gewicht und Größe mindestens eine, möglicherweise jedoch auch in priorisierter Reihenfolge, zwei oder drei Verpackungsvarianten der Warensendung. Nach Anfrage bei 4.5.7 SD Paper-Case über die Verfügbarkeit der kalkulierten Verpackungsmaterialien, erstellt der Onlineshop bei 4.5.4 SD Slot Calculator eine Anfrage über die Verfügbarkeit der Lagerkapazitäten in dem vom Kunden gewünschten SD oder auch wenn durch den Kunden durch seine Angaben in den SD Stammdaten freigestellt, "den" Schlemmerdepot's.

Erst wenn eine Lagerzusage durch den SD Slot Calculator erfolgt ist, kann den Kunden der Auftrag zugesagt werden.

Die vom SD Slot Calculator zur Verfügbarkeit bestätigte und reservierte Verpackungsvariante wird dem Auftrag hinzugefügt und dient später in der Praxis beim Kommissionieren der Waren als Packstückvorgabe.

Außerdem generiert das System für jede bestätigte Bestellung einen persönlichen QRod. EAN-Code, welcher ebenfalls die Ware bis zur Auslagerung begleitet und über welchen jederzeit die Historie der Kommission nachvollziehbar ist.

### 4.5.3 SD Production Assistant

SD Production Assistant ist eine Applikation welche nach vorheriger Lernphase durch benutzerdefinierte Angaben, dem Akteur die Produktionsplanung enorm vereinfacht. Die App kommuniziert permanent mit dem 4.5.2 Online Shop des Akteurs, sowie der Applikation 4.5.5 SD Kommission.

Sie addiert die bestellten Waren in die Produktionskalkulation und subtrahiert bereits kommissionierte Waren. Sie bietet die Möglichkeit der Führung einer Warenbestandsdatenbank deren Angaben mit in die Produktionskalkulation eingepflegt werden.
Der Akteur hat die Möglichkeit, nicht nur die noch zu produzierenden Gesamtmengen einzelner Waren anzeigen zu lassen, sondern dies auch stufenweise innerhalb einzelner Produktionstage. bspw. "1000 noch zu produzierende bestellte Wiener, 300 bis 4.8.2013, 300 bis 5.8.2013, 400 bis 6.8.2013.
Dies erfolgt nicht nur in Text- sondern auf Wunsch auch visueller Form als Diagram.

Die App berechnet unter Einbeziehung von betriebseigenen Rezepturen automatisch die noch benötigten Materialmengen, welche zur Produktion der Waren notwendig sind. Auch dies geschieht in Relation zu den Terminen an welchen die Waren benötigt werden und kann in Text als auch visueller Form erfolgen.

Auch hier besteht die Möglichkeit zur Koppelung einer Materialdatenbank um dem Akteur nicht nur eine Auflistung der benötigten Materialmengen, welche zur Abarbeitung der bestellten Waren anzeigen zu können, sondern ihm auch eine Materialeinkaufsempfehlung samt der benötigten Wert- und Inhaltsstoffe der einzelnen Waren erstellen zu können.

### 4.5.4 SD Slot Calculator

Der SD Slot Calculator organisiert, plant und führt Aufzeichnungen sämtlicher SD Slot Angelegenheiten. Sowohl die des Primary- als auch der Secondary SD's eines Akteurs. Es kommuniziert permanent mit 4.5.2 Onlineshop des Akteurs, 4.5.5 SD Kommission, 4.5.6 SD MHD Reminder Storage Assistant sowie 4.5.9 SD Slot share'n trade .

### 4.5.5 SD Kommission

Die Kommissionssoftware kommuniziert ebenfalls mit verschieden Anwendungen des SD's.

Es erhält seine Aufträge vom 4.5.2 Onlineshop des Akteurs. Der Akteur hat die Möglichkeit, seinen Warenliste mit verschiedenen Kennziffern zu versehen, sodass die Kommissionssoftware selbständig Aufträge splitten und an verschiedene Kommissionsterminals senden kann, sodass in verschiedenen und auch gleichen Abteilungen, Mitarbeiter gleichzeitig und auch zeitversetzt gemeinsame Kommission abarbeiten können, welche dann im Depot gemeinsam ausgelagert und an den Kunden übergeben werden können.

So kann im Beispiel einer Metzgerei ein Mitarbeiter alle Wurstkomponenten aller Kommissionen abarbeiten, während, bevor, oder nachdem ein anderer Mitarbeiter alle Fleischkomponenten abarbeitet.

SD Kommission übernimmt den vom Onlineshop definierten Waren ID Code und generiert wenn nötig selbständig weitere, welche dann als der Kommission dazugehörig gespeichert werden.

SD Kommission gibt dem Mitarbeiter die vorab kalkulierten und dafür bereits im Depot reservierten Packstücke vor. Sollte sich in der Praxis ein vorgeschlagenes Packstück oder eine Packstückkombination als nicht für den Auftrag realisierbar erweisen, so hat der Mitarbeiter die Möglichkeit andere Packstückvariationen während des Kommissionsvorganges vom 4.5.4 SD Slot Calculator prüfen zu lassen und falls möglich zu verändern.

### 4.5.5 SD Kommission meldet verbrauchte Packstücke sofort an 4.5.7 SD Paper-Case.

Es besteht die Möglichkeit, die Einstellungen so vorzunehmen, dass 4.5.5 SD Kommission entweder die kommissionierten Artikel Waren in einem gemeinsamen Lieferschein am Ende des Kommissionsvorgangs zusammenfasst, allerdings kann das System auch eine Bestellung in verschiedene zusammengehörige oder getrennt gehandelte Lieferscheine splitten. Dies ist insbesondere dann von Vorteil, wenn zwischen einzelnen Abteilungen im Betrieb eines Akteurs eine genaue buchhalterische Trennung gewünscht oder notwendig ist.

Der od. die Lieferschein/e kann/können nur gedruckt, aber auch nach Fertigstellung des Kommissionsvorganges per E-Mail an den Kunden gesendet werden.

Sollten einzelne Artikel einer Bestellung nicht lieferbar gewesen sein, so sendet das System automatisch eine Nachricht an den Kunden, damit dieser informiert ist und frühzeitig in der Lage ist gegebenenfalls Ersatz für die fehlenden Waren zu beschaffen.

Gleichwohl erstellt die Software hier ein Bookmark welches für die Funktion 4.3.4 SD Ordertrack dem Tracken der Bestellung notwendig ist.

### 4.5.6 SD MHD Reminder and Storage Assistant

Jede Warenkommission erhält ein Mindesthaltbarkeitsdatum, welches sich nach dem am kürzesten haltbaren Artikel in der Kommission richtet.

Während das SD wie bei 4.3.3 Forgotten Package Reminder beschrieben, den Kunden an seine Waren erinnert, wird beim SD MHD Reminder and Storage Assistant der Akteur auf die sich noch im Depot befindlichen, jedoch kurz vor dem Verfallsdatum stehenden Artikel hingewiesen.

Beim Depot mit Tiefkühlvariante, besteht die Möglichkeit, dass der Lagerroboter nach zuvor festgelegten Verfahrensschritten automatisch, oder auf Anweisung des DM, Artikel die im Frischesortiment auf Vorrat angeboten wurden, dann in den Tiefkühlbereich umlagert.

Geschieht dies, orientiert sich der SD MHD Reminder and Storage Assistant nun am neuen Tiefkühl MHD und ändert automatisch den Status der Sendung im Onlineshop des Akteurs sowie der Markethall.

Durch den 4.5.6 SD MHD Reminder and Storage Assistant, erhält der Akteur permanent die Möglichkeit sich Bericht über den Gesamtstatus seiner SD Aktivitäten erstatten zu lassen. -Wie hoch ist der Warenwert, der eigenen sich noch im Depot befindlichen Waren? Welche sind davon bereits verkauft? Welche befinden sich im freien Verkauf? Wie hoch war, bzw. ist die Lagerplatzauslastung? ect.

### 4.5.7 SD Paper-Case:

Mit der Applikation SD Paper Case nachfolgend SDPC genannt, hat der Akteur in seinem Akteurs-Account, auf dem Server des Schlemmerdepot's, die Möglichkeit, das Layout und die Gestaltung seiner Verpackungen nach seinen eigenen Wünschen und Vorstellungen zu entwerfen.

Er wählt aus einer Liste von Faltkartons bzw. Verpackungen unterschiedlicher Größen und Formaten die für Ihn optimalen Kartons aus, bekommt ein Grundlayout, sowie das Logo des Schlemmerdepot's vorgeschlagen, kann das Layout verändern, eigene Texte einfügen, die Entwürfe und Vorlagen dort speichern und nach dem Fertigstellen des Layouts, die Verpackungen direkt beim Hersteller bestellen.

SDPC überwacht den Bestand der Verpackungsmittel.

### SD Paper-Case

Sobald beim Kommissionsvorgang eine Verpackung als benutzt registriert wird, wird diese Information an die App gesendet und SDPC subtrahiert dieses Packstück vom Bestand.

Der Akteur legt, sobald er seinen Verpackungs-Erstbestand im SDPC definiert, für jedes Packstück einen Mindestlagervorrat fest. Wird dieser beim Kommissioniervorgang unterschritten, meldet dies SDPC den DM und schlägt die Bestellung des jeweiligen Packstückes in einer zuvor ebenfalls durch den Akteur grundhaft definierten Menge vor. Der DM hat die Möglichkeit die Bestellmenge zu verändern oder nicht, bestätigt er den Bestellvorschlag der App, werden die Packstücke automatisch gemäß den zuvor definierten Konditionen beim Hersteller bestellt.

Hierbei generiert SDPC einen sendungsspezifischen QR-oder EAN-Code, welcher mit dem Auftrag an den Hersteller gesendet wird und diesen bis zum Eintreffen der Ware in den Akteursbetrieb begleitet.
Erreicht die Warensendung nun den Akteursbetrieb, und wird der Code am Kommissionterminal gescannt, registriert SDPC die Art der Packstücke sowie die Anzahl dieser als Bestandszugang und addiert diese in der jeweiligen Bestandsliste des einzelnen Packstückes.
SDPC vergleicht den Verbrauch der Packstücke periodengerecht mit dem der Vorjahre und schlägt im Falle dessen, dass ein allgemein erhöhter Verbrauch verzeichnet wird, aber auch ein temporär gesteigerter Mehrverbrauch durch saisonbedingten Mehrbedarf bspw. an Weihnachten zu erwarten ist, dem DM eine erhöhte Bestellmenge der Packstücke vor.

### 4.5.8 SD Flyer-Store:

Ähnlich wie der bei Punkt beschriebenen Funktion des Depot Paper Case, bekommt der Akteur beim Schlemmerdepot Flyer-Store die Möglichkeit, dieses Programm auf dem Server des Schlemmerdepot in seinem Akteurs Account aufzurufen, hier Vorlagen zu nutzen, Werbemittel wie Flyer, Broschüren, Plakate, Banner ect. mit eigenen Texten, sowie Bilder und Logos zu gestalten und diese direkt beim Hersteller zu bestellen.

### 4.5.9 SD Slot share n'trade

Jeder Akteur eines Depot's hat die Möglichkeit, Handel mit seinen Lagerressourcen zu betreiben.

Handel kann beim "Depot Slot Trade" unter den sich zum Handel bereit erklärenden Akteuren eines Depot's, beim "Global Depot Slot Trade" aber auch den Akteuren unterschiedlicher Depot's stattfinden.

Jeder Akteur der sich zum Handel seiner Lagerplätze bereit erklärt, legt flexibel fest, wie viel Prozent seiner "nicht belegten oder reservierten" Lagerplätze er der Slot Börse, dem Handel mit Lagerplätzen", zu welchen Konditionen zur Verfügung stellt. Gleichzeitig definiert der Akteur, nach welchen Prioritäten der Einkauf von benötigten Lagerkapazitäten vonstatten gehen soll. Sollen freie Lagerkapazitäten gezielt von befreundeten Akteuren eingekauft werden? Richtet sich der Einkauf nach dem besten Preis? ect.

Sollten SD Slot share n'trade, durch die Akteure keine dem Markt zur freien Vergabe stehenden SD Slots zur Verfügung stehen, es aber dennoch freie Kapazitäten bei angeschlossenen Akteuren erkennen, so fragt das System über die DM der Akteure welche über freie Slot Ressourcen, nach diesen an und vergibt diese nach besonderer Freigabe.

4.5.9 SD Slot share n'trade dokumentiert alle Bewegungen und Vergaben von Depot Slots und erstellt jedem Akteur nach zuvor eingestellter zeitlicher Parameter, für jeden seiner Handel treibenden Akteure Forderungen gegenüber anderen Akteuren und leitet diese zum Zweck der Abwicklung an 4.5.11 SD Finance weiter.

### 4.5.10 SD Schnittstellen

Im System des SD werden Akteur-spezifisch an verschiedenen Punkten Schnittstellen definiert, um die Einflechtung in vorhandene betriebliche Systeme und die Nutzung dieser zu ermöglichen.

Somit können bspw. betriebseigene Waagen und Warenwirtschaftssysteme sowie Finanzbuchhaltungs-Systeme, kurz FiBu, mit dem System des SD's verbunden und genutzt werden.

### 4.5.11 SD Finance

Alle Finanzforderungen, die im Rahmen des Betriebes des SD's entstehen, werden zum Zwecke der Zuordbarkeit mit einem spezifischen Zahlungscode versehen.

### 4.5.11.1 Betriebskostenrechner mit Splitting Funktion:

Alle Kosten, welche durch das Betreiben des Schlemmerdepots entstehen, Leasingraten, Finanzierung, Stromkosten, Stellplatzpacht, Stellplatzfinanzierung, Wartungskosten, Aufwandsentschädigungen des GDM und Dergleichen, werden bei dieser Funktion summiert und nach einem zuvor festgelegten Verteilungsschlüssel auf die einzelnen verteilt.

Die hierdurch entstehenden Forderungen, sowie die Kontoführung werden durch den GDM verwaltet und realisiert.

Der GDM hat im Falle dessen, dass von der Funktion 4.5.11.5 SD Finance Professional Gebrauch gemacht wird, die Möglichkeit, dieser automatisiert die entstehenden Forderungen zu übertragen und durch diese Funktion realisieren zu lassen.

Die angeschlossenen Akteure, werden über die Abrechnung sowie die Kontobewegungen dieser Funktion, je nach Einstellung dieser Funktion, sofort nach jeder Kontobewegung oder in bestimmten periodischen Abständen durch den 4.4.1 SD DM Verteiler in Kenntnis gesetzt.

### 4.5.11.2 Cash Money:

Die Bargeldfunktion am Zahlungsterminal wird durch den GDM, oder automatisiert durch die Funktion "4.5.11.5.1 Cash Money pro" betrieben.

Wird von dieser Funktion kein Gebrauch gemacht, pflegt der GDM den Wechselgeldbestand, sowie die eingegangen Bargelder des SD's.

Ihm wird seitens des Systems automatisch die Finanzverteilung des Geldes übermittelt und er veranlasst die Verteilung der finanziellen Mittel nach diesem Schlüssel.

### 4.5.11.3 Akteur Forderungen:

Das System erstellt dem Akteur eine Auflistung über alle Forderungen samt der dazugehörigen spezifischen Zahlungscodes, und den zur Abwicklung relevanten Daten, zu den von ihm auch durch das SD übergebenen gelieferten Waren.

### 4.5.11.3.1 Offene Posten Liste:

Alle in der Funktion 4.5.11.3 Akteur Forderungen vom System definierten Forderungen des Akteurs, werden automatisch in dessen "Offene Posten Liste" eingefügt.

Diese offene Posten Liste wird seitens des Akteurs, oder aber beim Nutzen der Funktion 4.5.11.5 SD Finance Professional durch diese und deren angegliederte Funktionen gepflegt.

### 4.5.11.4 SD Bilanz:

4.5.11 SD Bilanz kommuniziert sobald vom Akteur gefordert, mit 4.5.6 SD MHD Reminder and Storage Assistant, um eine Aufstellung der befindlichen Warenwerte des Akteurs im Depot zu erhalten, sowie mit allen relevanten Funktionen von 4.5.12 SD Finance, um eine Aufstellung des Geldflusses, der Verbindlichkeiten sowie der Forderungen des angeschlossenen Akteur's zu erhalten.

Diese Auflistung, welche gleichzeitig eine Inventurauflistung beinhaltet, wird dem Akteur zur Übersicht bereitgestellt.

Außerdem wird ein Datensatz, mit diesen Informationen als Inhalt, im zuvor definierten Format, bspw. DATEV, XML, oder CSV generiert, welcher dann durch den Akteur in seine Finanzbuchhaltungssoftware eingepflegt werden kann.

### 4.5.11.5 SD Finance Professional:

### 4.5.11.5.1 Cash Money pro:

Diese Funktion pflegt vollautomatisiert die Bargeldbewegungen des SD's.

Beim Nutzen dieser Funktion, wird mit einem Bargelddienstleister sowie einem allgemeinen Finanzdienstleister ein Vertragsverhältnis eingegangen. Nach zuvor vereinbarten Parametern, pflegt der Bargelddienstleister den Wechselgeldbestand des SD's, entnimmt diesem die eingegangenen Bargelder und zahlt diese auf ein bestimmtes Konto des Finanzdienstleisters ein, welcher danach anhand des ihm vom System übermittelten Verteilungsschlüssels, diese dann an die einzelnen Akteure verteilt.

Dem Akteur werden vom System automatisch die finanzbuchhalterisch relevanten Daten der eingegangenen Zahlungen übermittelt und in die Funktion 4.5.11.4 SD Bilanz eingepflegt.

### 4.5.11.5.2 SD Inkasso:

Beim Nutzen der Funktion 4.5.11.5.2 SD Inkasso hat der Akteur die Möglichkeit mit einem Finanzdienstleister ein Geschäftsverhältnis einzugehen.

In diesem Falle werden dem Finanzdienstleister alle im Punkt "4.5.11.3 Akteur Forderungen" definierten Forderungen des Akteurs und der zur Realisierung relevanten Daten übermittelt.

Je nach Vertragsverhältnis zwischen Akteur und Finanzdienstleister werden die offenen Forderungen des angeschlossenen SD Akteur" s, nach einer der 4 nachfolgend aufgeführten und möglichen Formen der Tätigkeit von Inkassounternehmen, durch diesen Finanzdienstleister realisiert.
1. Einziehung im Auftrag (Inkassounternehmen wird namens und im Auftrag des Auftraggebers tätig)
2. Einziehungsermächtigung (wie bei 1.; das Inkassounternehmen ist bevollmächtigt, im eigenen Namen die Zahlung zu verlangen)
3. Inkassozession (Abtretung der Forderung - § 398 BGB - zum Zwecke der Einziehung)
4. Vollabtretung (Forderungskauf - Abtretung an Inkassounternehmen ohne Zweckbindung).

Durch Nutzen dieser Funktion, wird automatisch auch die Funktion 4.5.11.3.1 Offene Posten Liste des Akteurs "statusgenau" gepflegt.

So wird in der offenen Posten Liste bspw. nach Einzug der Forderung diese als vorbehaltlich erhaltene Zahlung, und nach Ablauf der Rückholfrist des Kunden als erhaltene Zahlung registriert und dem Akteur danach gutgeschrieben, dementsprechend buchhalterisch erfasst und die Daten der Funktion 4.5.11.4 SD Bilanz übermittelt und in diese eingepflegt.

### 4.5.11.5.3 SD Inkasso Pro:

Bei "4.5.11.5.2 SD Inkasso Pro" handelt es sich um eine Funktion des professionellen Forderungsmanagement.

Der Akteur hat hierbei die Möglichkeit, unkompliziert mit einem Advokaten eine geschäftliche Beziehung einzugehen, um ausstehende Forderungen schnell und effektiv zu realisieren.

Für den Fall, dass Forderungen des Akteurs sich als bisher nicht realisierbar erweisen, wird der Akteur durch das System auf diese aufmerksam gemacht. Entscheidet der Akteur sich dafür, anwaltlich den Einzug ausstehender Forderungen zu veranlassen, werden der beauftragten Kanzlei automatisch alle für die Realisierung notwendigen Daten zur Verfügung gestellt.

Das Ergebnis dieses Procedere, wird zwecks betriebswirtschaftlicher Auswertung, automatisch 4.5.11.4 SD Bilanz zur Verfügung gestellt.

### 4.6 Warn- sowie Notfallprocedere:

### 4.6.1 Spannungsverlust:

Verliert das SD die Spannungsversorgung, so werden die Depot Manager der angeschlossenen Akteure sofort gemäß dem definierten Algorithmus Notfallplan entsprechend, umgehend per Sms und/oder E-Mail benachrichtigt.

Gleichzeitig wird Hard-und Softwareschäden, durch eine im Falle des Spannungsverlustes eingeleiteten "Dasi" (Datensicherung), sowie einer "SD Startregelung nach Spannungsverlust" bestmöglich vorgebeugt.

Außerdem versorgt das SD die Überwachungskameras weiterhin mit Spannung aus der Notstromreserve und versendet automatisch die im Speicher befindlichen Aufnahmen des vorab festgelegten Zeitraumes, sowie die Aufnahmen die während des Spannungsverlustes entstehen.

### 4.6.2 Temperaturschwankungen ausserhalb vorab definierter Norm

Registriert das digitale Temperaturaufzeichnungsgerät wie in Punkt 2.2.3 beschrieben eine relevante vom vorab definierten gewünschten Temperaturbereich, so werden umgehend alle DM durch den SD DM Verteiler informiert um schnellstmöglich eingreifen zu können.

### 4.6.3 Allgemeine Störungen:

Bei allgemeinen Störungen jeglicher Art, werden auch hier die vorab definierten DM's der angeschlossenen Akteure, per SMS und/oder E-Mail benachrichtigt, um durch Ihr Aktivwerden, die Störung schnellstmöglich beheben zu können.

### 5. Daniel's Schlemmerdepot Premium Marketplace

Bei der optional verfügbaren Funktion "Daniel's Schlemmerdepot Premium Marketplace", bietet der Akteur durch die Software dem Kunden ein neues Online-Einkaufserlebnis an, welches durch 3D-Grafiken den Einkauf auf einem richtigen Marktplatz, oder Ladengeschäft so real wie möglich darstellt.

Der Kunde hat wie in einem Videospiel die Möglichkeit, über den Marktplatz zu laufen und die jeweiligen Geschäfte welche auch optisch den Original-Ladengeschäften nachempfunden sind, bzw. die Markethall zu betreten.

Im Onlineshop selbst, ist die Laden- und Thekengestaltung sowie die Bedienung durch das Stammpersonal der Realität nachempfunden.

### 6. Daniel's Schlemmerdepot Premium Marketplace Deluxe

Bei dieser Funktion besteht zusätzlich zu den in Punkt 6 definierten Funktionen die Möglichkeit, einen Chatbereich einzurichten. Somit können Kunden beim Einkauf im Schlemmerdepot Marketplace sich mit anderen Kunden treffen und bspw. über deren Einkäufe unterhalten und untereinander Kaufempfehlungen austauschen.

## Patentansprüche

1. Verfahren zum Handling und/oder Vertrieb von Ware, die von zumindest einem ersten Akteur, wie Lieferant, an eine Annahmeeinrichtung eines Warendepots geliefert wird, wobei der Ware eine individuelle Kennung zugeordnet wird, wobei die Ware mittels eines in dem Warendepot integrierten Handling-Systems automatisch durch die Annahmeeinrichtung angenommen und in einem Lagerbereich des Warendepots gelagert wird und
wobei die Ware nach Eingabe der individuellen Kennung durch zumindest einen zweiten Akteur oder nach Identifizierung des zumindest einen zweiten Akteurs mittels des Handling-Systems automatisch aus dem Lagerbereich einer Ausgabeeinrichtung zugeführt und von dem zumindest einem zweiten Akteur, wie Entnehmer oder Kunde, aus dem Warendepot entnommen wird, **dadurch gekennzeichnet,**
**dass** die Zuordnung der individuellen Kennung zu der Ware durch Erfassen der Ware oder einer Codierung der Ware bei der automatisierten Annahme, durch Eingabe des ersten Akteurs oder durch Generierung des Warendepots erfolgt, wobei der Ware über die individuelle Kennung eine Information über eine Lagertemperatur zugeordnet wird,
**dass** als Warendepot ein solches verwendet wird, bei dem der Lagerbereich unterschiedliche Klimatisierungszonen aufweist, wobei eine der Klimatisierungszonen eine Tiefkühlzone ist,
**dass** die Ware mittels eines Lagerroboters des Handling-Systems entsprechend der der Ware zugeordneten Lagertemperatur automatisch in einer der Klimatisierungszonen des Lagerbereichs gelagert wird und
**dass** der Ware über die individuelle Kennung eine Information über ein Mindesthaltbarkeitsdatum oder Verfallsdatum zugeordnet wird, wobei die Ware vor Ablauf des Mindesthaltbarkeitsdatums oder Verfallsdatum mittels des Lagerroboters nach zuvor festgelegten Verfahrensschritten automatisch in die Tiefkühlzone umgelagert wird.

2. Verfahren nach Anspruch 1,
**dadurch gekennzeichnet,**
**dass** die individuelle Kennung Informationen über eine Zuordnung der Ware zu zumindest einem der ersten und/oder zweiten Akteure, wie Entnehmer oder Kunde, enthält.

3. Verfahren nach Anspruch 1 oder 2,
**dadurch gekennzeichnet,**
**dass** die individuelle Kennung durch Scannen eines EAN- oder QR-Codes erfasst wird und/oder durch Ausgabe eines Belegs oder einer visuellen Anzeige an dem Warendepot oder einem externen Gerät wie mobilem Datengerät oder Personal Computer generiert wird und/oder dass die individuelle Kennung dem zweiten Akteur wie Entnehmer oder Kunden übermittelt wird.

4. Verfahren nach zumindest einem der vorhergehenden Ansprüche,
**dadurch gekennzeichnet,**
**dass** die Identifizierung des zweiten Akteurs wie Entnehmer oder Kunde mittels eines Identifikationssystems wie Touchscreen-Display, Fingerprint-Sensor, Kartenlesegerät und/oder Scanner erfolgt und dass bei einer Übereinstimmung der Identifizierung mit der individuellen Kennung eine Ausgabe der entnehmer- oder kundenspezifischen Ware erfolgt.

5. Warendepot (10, 12) zum Handling und/oder Vertrieb von Ware, der eine individuelle Kennung zugeordnet wird, umfassend
- Mittel (28, 30) zur automatisierten Annahme der Ware von zumindest einem ersten Akteur, wie Lieferant,
- Mittel (14, 18, 38, 40, 42, 44) in Form eines Handling-Systems (40) zur Lagerung der Ware in einem Lagerbereich (14, 18) und
- Mittel (28, 32) zur automatisierten Abgabe der Ware an zumindest einen zweiten Akteur, wie Entnehmer oder Kunde,
**dadurch gekennzeichnet,**
**dass** das Mittel (28, 30) zur Annahme der Ware als zumindest eine Annahmeeinrichtung und das Mittel (28, 32) zur Abgabe der Ware als zumindest eine Ausgabeeinrichtung ausgebildet ist,
**dass** das Mittel (28, 30) zur Annahme der Waren ausgebildet ist, automatisch die der Ware zugeordnete individuelle Kennung zu erfassen und/oder eine individuelle Kennung für die Ware zu generieren, wobei der Ware über die individuelle Kennung zumindest eine Information über eine Lagertemperatur zugeordnet wird,
**dass** der Lagerbereich (14, 18) unterschiedliche Klimatisierungszonen (14, 18) aufweist, von denen eine eine Tiefkühlzone (18) ist, wobei ein Lager-Roboter (42) des Handling-Systems (40) konfiguriert ist, zwischen den Klimatisierungszonen (14, 18) und der Annahmeeinrichtung und/oder Ausgabeeinrichtung (28, 30, 32) zu verfahren,
**dass** der Lager-Roboter (42) konfiguriert ist, die angenommene Ware entsprechend der der Ware zugeordneten Lagertemperatur automatisch in einer der Lagertemperatur entsprechenden Klimatisierungszone (14, 18) zu lagern, dass der Lager-Roboter (42) konfiguriert ist, die Ware nach Eingabe oder Erfassen der der Ware und/oder dem zweiten Akteur zugeordneten individuellen Kennung mittels des Lager-Roboters (42) automatisch der Ausgabeeinrichtung zuzuführen und auszugeben und
**dass** der Ware über die individuelle Kennung Informationen über ein Mindesthaltbarkeitsdatum oder Verfallsdatum zugeordnet wird, wobei der Lager-Roboter (42) konfiguriert ist, die Ware vor Ablauf des Mindesthaltbarkeitsdatums oder Verfallsdatums nach zuvor festgelegten Verfahrensschritten automatisch in die Tiefkühlzone umzulagern.

6. Warendepot nach Anspruch 5,
**dadurch gekennzeichnet,**
**dass** die Mittel (28, 30, 38, 40) zur automatisierten Annahme ein Mittel (36) zur Erfassung der individuellen Kennung der Waren, wie Scanning-System und/oder ein Ein-/Ausgabesystem (34) wie Tastatur, Touchscreen und /oder ein Mittel wie Drucker (50) oder Display (34) zur Generierung der individuellen Kennung umfasst.

7. Warendepot nach zumindest einem der Ansprüche 5 oder 6,
**dadurch gekennzeichnet,**
**dass** die zumindest eine Ausgabeeinrichtung als ein Ausgabeschacht (28, 30) und dass die zumindest eine Eingabeeinrichtung als ein Eingabeschacht (28, 32) ausgebildet ist und/oder dass der zumindest eine Ausgabeschacht (30) und der zumindest eine Eingabeschacht (32) als ein Ein-/Ausgabeschacht (28) ausgebildet ist.

8. Warendepot nach zumindest einem der Ansprüche 5 bis 7,
**dadurch gekennzeichnet,**
**dass** das Warendepot (10, 12) zumindest eine Klimatisierungseinrichtung (12) zur Temperatur- und/oder Luftfeuchteregulierung der Klimatisierungszonen (14, 18) umfasst und/oder dass das Warendepot (10) Mittel (48) zur Entgegennahme von Zahlungen in bar und/oder bargeldlos wie Kassenterminal aufweist und/oder über eine Kommunikationsschnittstelle mit einem Datennetz wie Internet gekoppelt ist.

9. Warendepot nach zumindest einem der Ansprüche 5 bis 8,
**dadurch gekennzeichnet,**
**dass** das Handling-System ein Lagersystem in Form eines Regalsystems (44) umfasst und/oder dass das Warendepot (10, 12) modular als z. B. isolierter Container ausgebildet ist.

## Claims

1. Method for the handling and / or marketing of item that are delivered by at least one first actor, such as supplier, to a receiving unit of a warehouse,
wherein an individual identification is assigned to the item,
wherein the item, using a handling system integrated in the warehouse, is automatically receive through the receiving unit and stored in a storage area of the warehouse and
wherein the item, after entering the individual identification by at least one second actor or after identification of the at least one second actor, is automatically delivered from the storage area by means of the handling system to a discharge unit and
is take out from the warehouse by the at least one second actor, such as a taker or customer, **characterized in,**
**that** the assignment of the individual identification to the item occurs by recording the item or a coding of the item during the automated receiving, by an input from the first actor or by generating from the warehouse,
wherein the item is assigned via the individual identification an information about a storage temperature,
**that** a warehouse is used in which the storage area has different air conditioning zones, one of the air conditioning zones is a deep-freeze zone,
**that** the item is automatically stored by means of a storage robot of the handling system according to the storage temperature assigned to the item in one of the air conditioning zones of the storage area and
**that** the item via the individual identification information about a best before date or expiry date is assigned, wherein the item is relocated using the storage robot automatically according to previously defined process steps in the deep-freeze zone before the expiry date or expiry date expires.

2. Method according to claim 1,
**characterized in,**
**that** the individual identification contains information about an assignment of the item to at least one of the first and / or second actors, such as taker or customer.

3. Method according to claim 1 or 2,
**characterized in,**
**that** the individual identification is detected by canning an EAN code or QR code and / or is generated by outputting a document or a visual display in the warehouse or on an external device such as a mobile data device or personal computer and / or that the individual identification can be transmitted to the second actor such as a taker or customer.

4. Method according to at least one of the preceding claims,
characterized,
that the identification of the second actor such as the taker or the customer occurs by means of an identification system such as a touchscreen display, fingerprint sensor, card reader and / or scanner and that in the event of a match of the identification with the individual identifier an output of the taker specific or customer specific goods occurs.

5. Warehouse (10, 12) for handling and / or marketing of item, that is assigned an individual identification, comprising
- means (28, 30) for the automated receiving of the item from at least a first actor, such as a supplier,
- means (14, 18, 38, 40, 42, 44) in the form of a handling system (40) for storage of the item in a storage area (14, 18) and
- means (28, 32) for the automated delivery of the item to at least a second actor, such as the taker or customer,
**characterized in,**
**that** the means (28, 30) for receiving the item is designed as at least one receiving unit and the means (28, 32) for delivering the item is designed as at least an output unit,
**that** the means (28, 30) for receiving the item is designed to record automatically the individual identification assigned to the item and / or to generate an individual identification for the item, wherein the item is assigned by the individual identification at least information about a storage temperature,
**that** the storage area (14, 18) has different air conditioning zones (14, 18) one of which is a freezer zone (18), wherein a storage robot (42) of the handling system (40) is configured to move between the air conditioning zones (14, 18) and the receiving unit and / or the output unit (28, 30, 32),
**that** the storage robot (42) is configured to store the item according to the storage temperature assigned to the item automatically in an air conditioning zone (14, 18) corresponding to the storage temperature,
**that** the storage robot (42) is configured to feed and deliver the item after input or detection of the individual identification assigned the item and / or the second actor by means of the storage robot (42) automatically to the output unit and
**that** the item is assigned with the individual identification information about a Best before date or Expiry date, wherein the storage robot (42) is configured to automatically relocate the item before the end of the Best before date or Expiry date according to previously specified process steps to the freezer zone.

6. Warehouse according to claim 5,
**characterized in,**
**that** the means (28, 30, 38, 40) for the automated receiving comprises a means (36) for detection of the individual identification of the item, such as a scanning system and / or an input / output system (34), such as a keyboard, touchscreen and / or a means such as printer (50) or display (34) for generating the individual identification.

7. Warehouse according to at least one of the claims 5 or 6,
**characterized in,**
**that** the at least one output unit is designed as an output shaft (28, 30) and that the at least one input unit is designed as an input shaft (28, 32) and / or that the at least one output shaft (30) and the at least one input shaft (32) is designed as an input / output shaft (28).

8. Warehouse according to at least one of the claims 5 to 7,
**characterized in,**
**that** the warehouse (10, 12) has at least one air conditioning device (12) for temperature and / or humidity regulation of the air conditioning zones (14, 18) and / or that the warehouse (10) has means (48) for receiving of payments in cash and / or cashless such as a cash register terminal and / or is coupled via a communication interface with a data network such as internet.

9. Warehouse according to at least one of the claims 5 to 8,
**characterized in,**
**that** the handling system comprises a storage system in the form of a shelf system (44) and / or that the warehouse (10, 12) is designed modular such as an isolated container.

## Revendications

1. Procédé de manipulation et/ou de vente de marchandises, lesquelles sont livrées par au moins un premier acteur, tel qu'un fournisseur, à un dispositif de réception d'un dépôt de marchandises, sachant qu'un code d'identification individuel est attribué à la marchandise,
sachant que la marchandise est réceptionnée automatiquement par le dispositif de réception à l'aide d'un système de manipulation intégré dans le dépôt de marchandises et est stockée dans une zone de stockage du dépôt de marchandises et
sachant que, après saisie du code d'identification individuel par au moins un deuxième acteur ou après identification d'au moins un deuxième acteur, à l'aide d'un système de manipulation, la marchandise est amenée automatiquement depuis la zone de stockage à un dispositif de sortie et est enlevée par au moins un deuxième acteur, tel qu'un préleveur ou un client du dépôt de marchandises,
**caractérisé en ce**
**que** l'attribution du code d'identification individuel à la marchandise se fait par le biais de l'enregistrement de la marchandise ou un codage de la marchandise lors de la réception automatisée, par la saisie du premier acteur ou par la génération du dépôt de marchandises, sachant qu'une information sur une température de stockage est attribuée à la marchandise par le biais du code d'identification individuel,
**que** le dépôt de marchandises utilisé est un dépôt dont la zone de stockage présente différentes zones de climatisation, sachant que l'une des zones de climatisation est une zone de congélation,
**que** la marchandise est stockée automatiquement dans l'une des zones de climatisation de la zone de stockage à l'aide d'un robot de stockage du système de manipulation conformément à la température de stockage attribuée à la marchandise et
**qu'**une information relative à la date limite de consommation ou la date d'expiration est attribuée à la marchandise par le biais du code d'identification individuel, sachant que, à l'aide du robot de stockage, la marchandise est déposée automatiquement dans la zone de congélation avant l'expiration de la date limite de consommation ou de la date d'expiration, conformément à des étapes de procédure préalablement définies.

2. Procédé selon la revendication 1,
**caractérisé en ce**
**que** le code d'identification individuel contient des informations relatives à une attribution de la marchandise à au moins l'un des premiers et/ou deuxièmes acteurs, tel qu'un préleveur ou un client.

3. Procédé selon la revendication 1 ou 2,
**caractérisé en ce**
**que** le code d'identification individuel est saisi en scannant un code EAN ou QR et/ou généré par l'émission d'un justificatif ou d'un affichage visuel au dépôt de marchandises ou un appareil externe tel qu'un appareil de données mobile ou un ordinateur personnel et/ou que le code d'identification individuel est transmis au deuxième acteur tel qu'un préleveur ou un client.

4. Procédé selon au moins l'une des revendications précédentes,
**caractérisé en ce**
**que** l'identification du deuxième acteur, tel qu'un préleveur ou un client, est effectuée à l'aide d'un système d'identification, tel qu'un écran tactile, un capteur d'empreintes digitales, un lecteur de cartes et/ou un scanner et qu'en cas de concordance de l'identification avec le code d'identification individuel, la marchandise spécifique au préleveur ou au client est délivrée.

5. Dépôt de marchandises (10, 12) pour la manipulation et/ou la vente de marchandises, auxquelles est attribué un code d'identification individuel, comprenant
- des moyens (28, 30) pour la réception automatisée de la marchandise d'au moins un premier acteur, tel qu'un fournisseur,
- des moyens (14, 18, 38, 40, 42, 44) sous forme d'un système de manipulation (40) pour le stockage de la marchandise dans une zone de stockage (14, 18) et
- des moyens (28, 32) pour la remise automatisée de la marchandise à au moins un deuxième acteur, tel qu'un préleveur ou un client,
**caractérisé en ce**
**que** le moyen (28, 30) de réception de la marchandise est conçu au moins sous la forme d'un dispositif de réception et le moyen (28, 32) de remise de la marchandise au moins sous la forme d'un dispositif de sortie,
**que** le moyen (28, 30) de réception des marchandises est conçu de sorte à détecter automatiquement le code d'identification individuel attribué à la marchandise et/ou de générer un code d'identification individuel pour la marchandise, sachant qu'au moins une information sur la température de stockage est attribuée à la marchandise par le biais du code d'identification individuel,
**que** la zone de stockage (14, 18) présente différentes zones de climatisation (14, 18), dont l'une d'elles est une zone de congélation (18), sachant qu'un robot de stockage (42) du système de manipulation (40) est configuré pour se déplacer entre les zones de climatisation (14, 18) et le dispositif de réception et/ou dispositif de sortie (28, 30, 32), que le robot de stockage (42) est configuré pour stocker automatiquement la marchandise réceptionnée conformément à la température de stockage attribuée à la marchandise dans une zone de climatisation (14, 18) correspondant à la température de stockage,
**que** le robot de stockage (42) est configuré pour amener et distribuer automatiquement la marchandise vers le dispositif de sortie après la saisie ou la détection du code d'identification individuel attribué à la marchandise et/ou au deuxième acteur à l'aide du robot de stockage (42) et
**que** des informations relatives à une date limite de consommation ou à une date d'expiration sont attribuées à la marchandise par le biais du code d'identification individuel, sachant que le robot de stockage (42) est configuré pour transférer automatiquement la marchandise dans la zone de congélation avant l'expiration de la date limite de consommation ou de la date d'expiration, conformément à des étapes de procédure préalablement définies.

6. Dépôt de marchandises selon la revendication 5,
**caractérisé en ce**
**que** les moyens (28, 30, 38, 40) de réception automatisée comprennent un moyen (36) de détection du code d'identification individuel des marchandises, tel qu'un système de numérisation et/ou un système d'entrée/sortie (34), tel qu'un clavier, un écran tactile et/ou un moyen, tel qu'une imprimante (50) ou un écran (34), pour la génération du code d'identification individuel.

7. Dépôt de marchandises selon au moins l'une des revendications 5 ou 6,
**caractérisé en ce**
**qu'**au moins un dispositif de sortie est conçu sous forme d'un compartiment de sortie (28, 30) et qu'au moins un dispositif d'entrée est conçu sous forme d'un compartiment d'entrée (28, 32) et/ou que l'au moins un compartiment de sortie (30) et l'au moins un compartiment d'entrée (32) sont conçus sous forme d'un compartiment d'entrée/de sortie (28).

8. Dépôt de marchandises selon au moins l'une des revendications 5 à 7,
**caractérisé en ce**
**que** le dépôt de marchandises (10, 12) comprend au moins un dispositif de climatisation (12) pour la régulation de la température et/ou de l'humidité des zones de climatisation (14, 18) et/ou que le dépôt de marchandises (10) présente un moyen (48) de réception de paiements en espèces et/ou scripturaux, tel qu'un terminal de caisse et/ou est raccordé à un réseau de données, tel qu'Internet, via une interface de communication.

9. Dépôt de marchandises selon au moins l'une des revendications 5 à 8,
**caractérisé en ce**
**que** le système de manipulation comprend un système de stockage sous forme d'un système d'étagères (44) et/ou que le dépôt de marchandises (10, 12) est conçu de manière modulaire, à titre d'exemple sous la forme d'un conteneur isolé.
